# EUROPEAN PATENT APPLICATION

(11) **EP 3 842 287 A1**
(43) Date of publication of application: **30.06.2021**
(21) Application number: 18931270.5
(22) Date of filing: 21.08.2018
(51) Int. Cl.: B60Q 1/50

(54) **DRIVING PLAN DISPLAY METHOD AND DRIVING PLAN DISPLAY DEVICE**

(71) Applicant: NISSAN MOTOR CO., LTD., Yokohama-shi, Kanagawa 221-0023 (JP)
(72) Inventor: SHINO, Tatsuya, Atsugi-shi, Kanagawa 243--0123 (JP); ASAI, Toshihiro, Atsugi-shi, Kanagawa 243--0123 (JP); DEGAWA, Katsuhiko, Atsugi-shi, Kanagawa 243--0123 (JP); ISHIMARU, Shuko, Atsugi-shi, Kanagawa 243-0123 (JP); EMOTO, Shuhei, Atsugi-shi, Kanagawa 243-0123 (JP); NOJIRI, Takahiro, Atsugi-shi, Kanagawa 243-0123 (JP); ITO, Atsushi, Atsugi-shi, Kanagawa 243-0123 (JP)
(74) Representative: Global IP Europe Patentanwaltskanzlei
(86) International application number: PCT/IB2018/001123
(87) International publication number: WO 2020/039224

(57) **Abstract**

To make it possible to accurately notify a pedestrian of an approaching state of a host vehicle.

The present invention is a driving plan display method, in which an in-vehicle road surface image display device that can display an image on a road surface is controlled using a display controller to display driving plan-related information of a host vehicle on the road surface. Steps (S1-S3) for acquiring the driving plan-related information of the host vehicle and information relating to prediction of a pedestrian's crossing, steps (S4, S5) for obtaining a predicted crossing point at which the pedestrian's crossing is predicted on a planned travel route of the host vehicle based on the acquired information, and a step (S7) for displaying an image of the driving plan-related information of the host vehicle, from a current position of the host vehicle to the crosswalk as the predicted crossing point, on the road surface of the crosswalk as the predicted crossing point with the road surface image display device are provided.

## Description

### Technical Field

The present invention relates to a driving plan display method and a driving plan display device.

### Background Art

A device that notifies a pedestrian of a travel route of a host vehicle is known from the prior art (for example, refer to Patent Document 1). This device predicts the travel route of the host vehicle and draws a diagram that urges pedestrians in the vicinity of the travel route not to enter the travel route, to thereby notify a pedestrian of the approach of the host vehicle and to prevent the pedestrian from entering the travel route of the host vehicle.

### Prior Art Documents

### Patent Documents

Patent Document 1: Japanese Laid-Open Patent Application No. 2014-13524

### Summary of The Invention

### Problem to Be Solved By The Invention

The technique disclosed in Patent Document 1 is for preventing a pedestrian from entering the travel route of a host vehicle; therefore, when the pedestrian intends to cross a road it is not possible to display the information necessary for determining whether the pedestrian should cross the road.

In view of the problem described above, an object of the present disclosure is to provide a driving plan display method and a driving plan display device that are capable of displaying to a pedestrian the information necessary for determining whether to cross a road.

### Means to Solve The Problem

In order to achieve the object described above, the driving plan display method and the driving plan display device according to the present disclosure are configured to display an image on a road surface at a predicted crossing point where a pedestrian is predicted to cross the road, information relating to the driving plan of a host vehicle, from the current position of the host vehicle to the predicted crossing point.

### Effects of The Invention

The driving plan display method and the driving plan display device according to the present disclosure can display to the pedestrian the information necessary for determining whether to cross the road.

### Brief Description of The Drawings

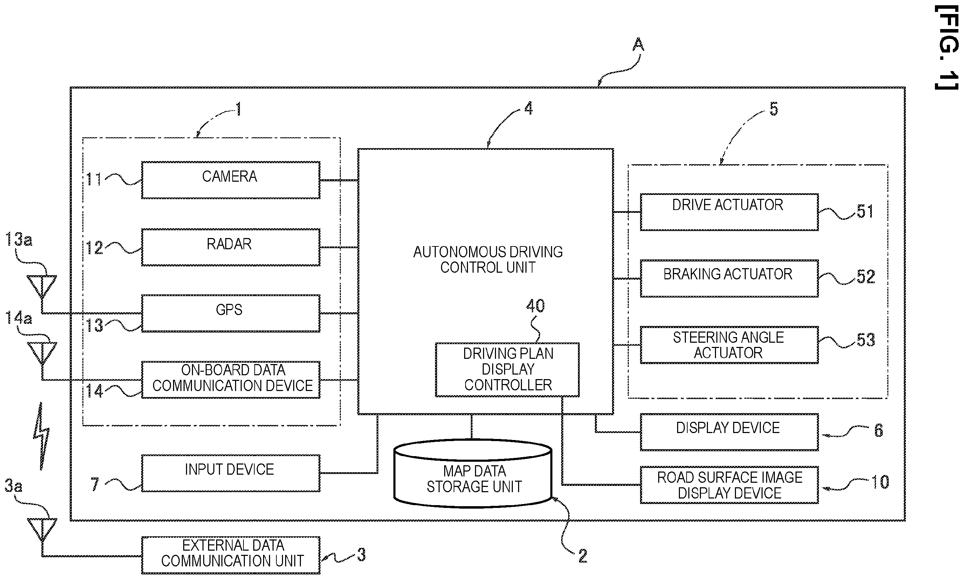

Figure 1 is an overall system view illustrating an autonomous driving control system A to which are applied a driving plan display method and a driving plan display device according to a first embodiment.

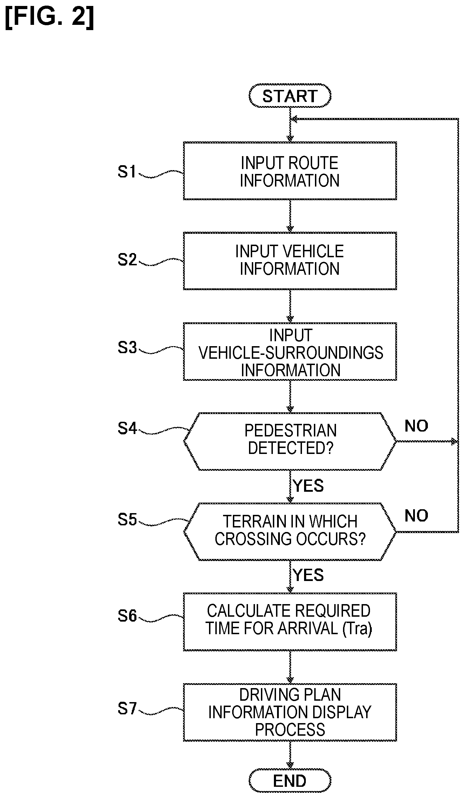

Figure 2 is a flowchart illustrating a process flow of a driving plan information display process executed by a driving plan display controller 40 of the autonomous driving control system A.

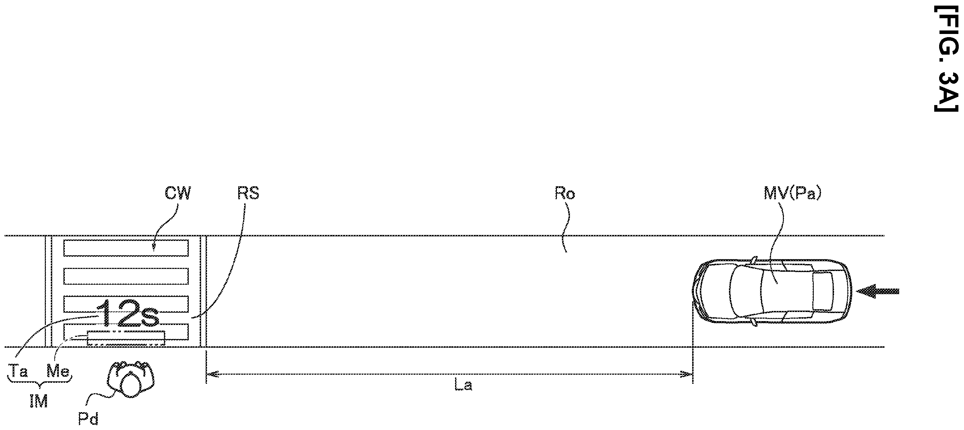

Figure 3A is a plan view illustrating one example of an image IM displayed by means of the driving plan information display process according to the first embodiment and a state in which the distance between a vehicle MV (host vehicle) and a crosswalk CW as a predicted crossing point is distance La.

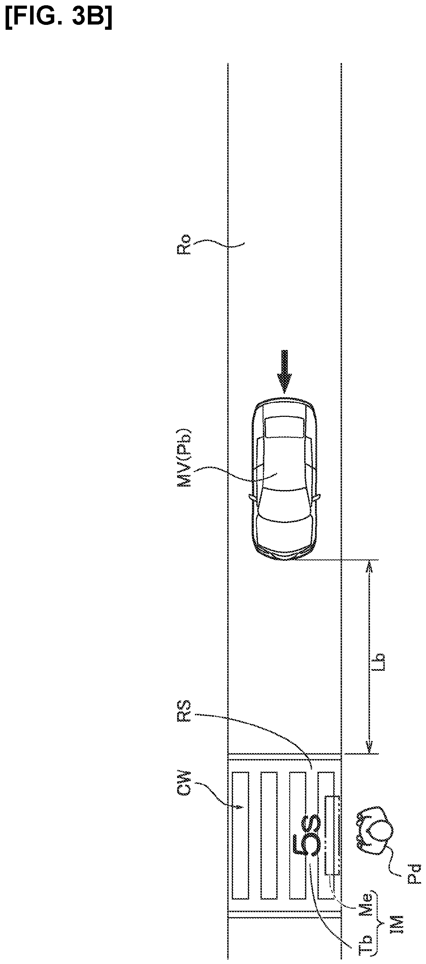

Figure 3B is a plan view illustrating one example of the image IM displayed by means of the driving plan information display process according to the first embodiment and a state in which the distance between the vehicle MV (host vehicle) and the crosswalk CW as the predicted crossing point is distance Lb, which is shorter than the distance La.

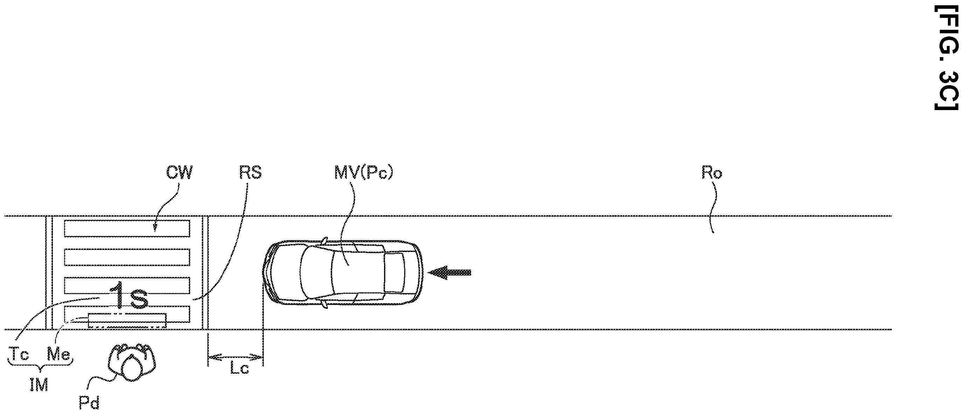

Figure 3C is a plan view illustrating one example of the image IM displayed by means of the driving plan information display process according to the first embodiment and a state in which the distance between the vehicle MV (host vehicle) and the crosswalk CW as the predicted crossing point is distance Lc, which is shorter than the distance Lb.

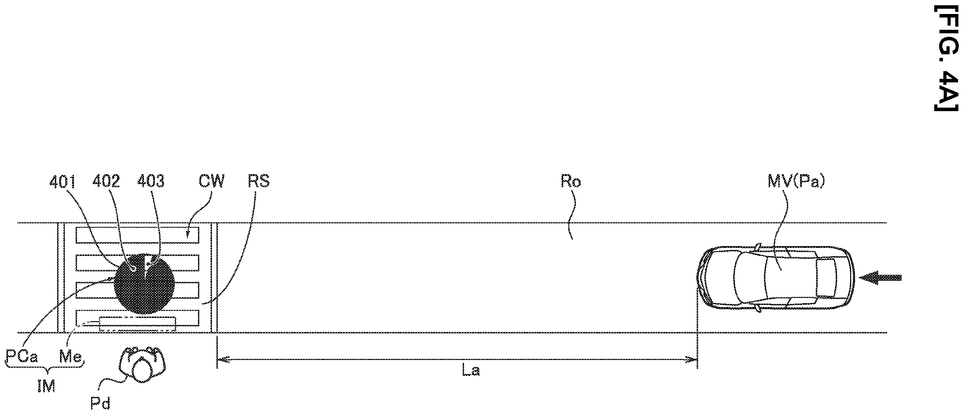

Figure 4A is a plan view illustrating one example of the image IM displayed by means of the driving plan information display process according to a second embodiment and a state in which the distance between the vehicle MV (host vehicle) and the crosswalk CW as the predicted crossing point is distance La.

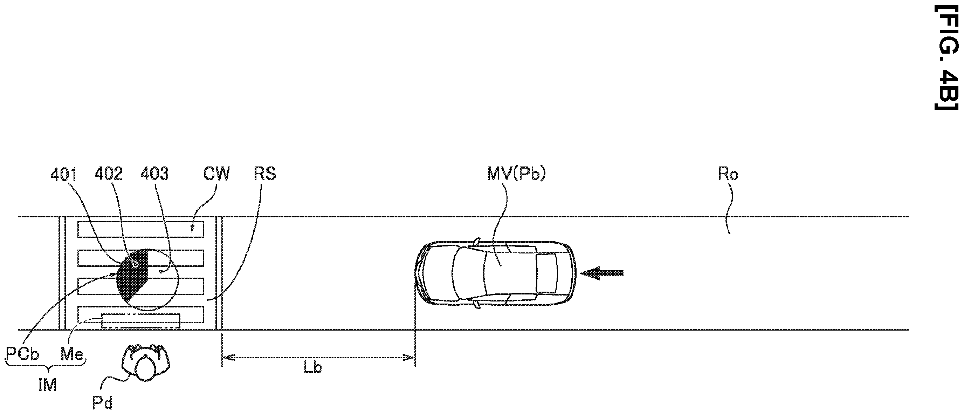

Figure 4B is a plan view illustrating one example of the image IM displayed by means of the driving plan information display process according to the second embodiment and a state in which the distance between the vehicle MV (host vehicle) and the crosswalk CW as the predicted crossing point is distance Lb, which is shorter than the distance La.

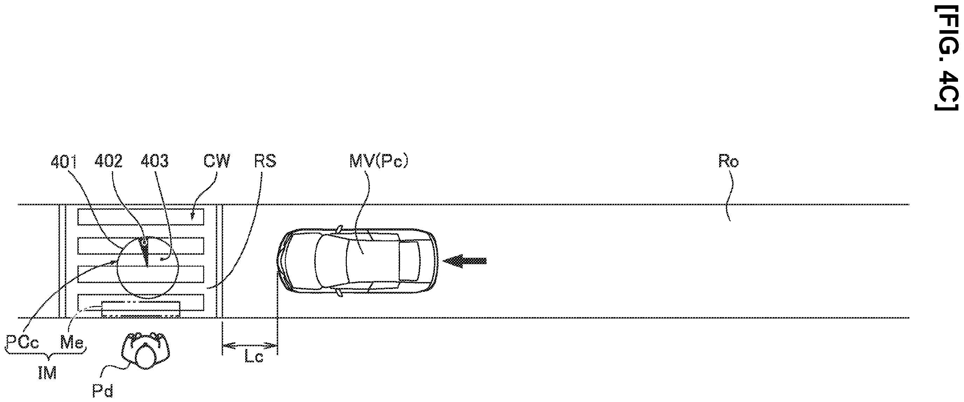

Figure 4C is a plan view illustrating one example of the image IM displayed by means of the driving plan information display process according to the second embodiment and a state in which the distance between the vehicle MV (host vehicle) and the crosswalk CW as the predicted crossing point is distance Lc, which is shorter than the distance Lb.

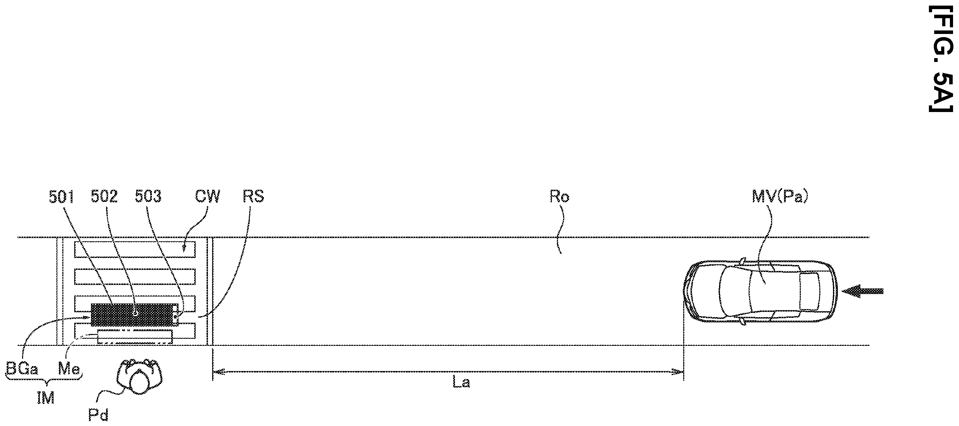

Figure 5A is a plan view illustrating one example of the image IM displayed by means of the driving plan information display process according to a third embodiment and a state in which the distance between the vehicle MV (host vehicle) and the crosswalk CW as the predicted crossing point is distance La.

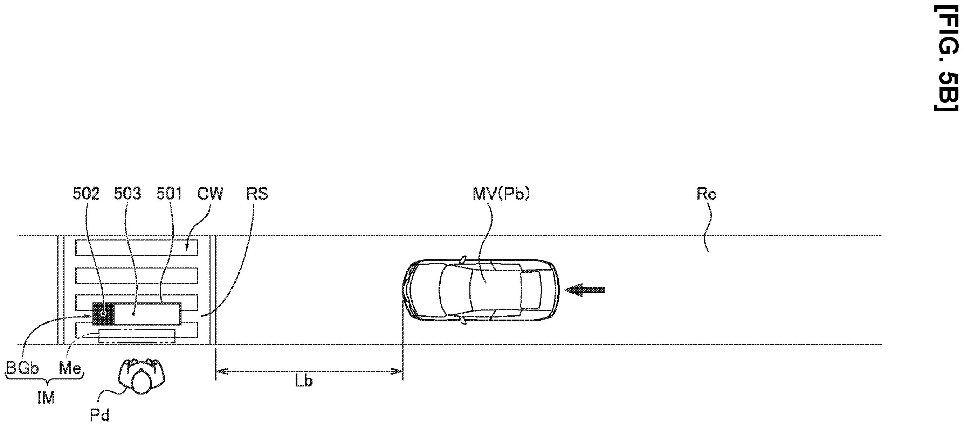

Figure 5B is a plan view illustrating one example of the image IM displayed by means of the driving plan information display process according to the third embodiment and a state in which the distance between the vehicle MV (host vehicle) and the crosswalk CW as the predicted crossing point is distance Lb, which is shorter than the distance La.

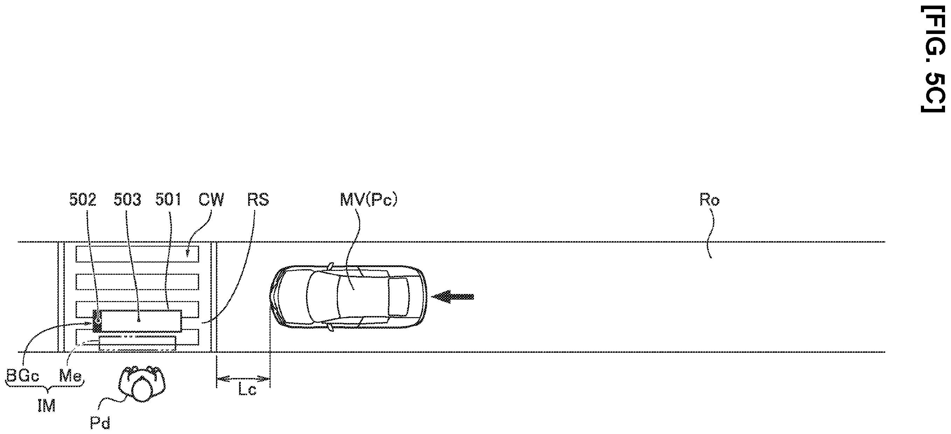

Figure 5C is a plan view illustrating one example of the image IM displayed by means of the driving plan information display process according to the third embodiment and a state in which the distance between the vehicle MV (host vehicle) and the crosswalk CW as the predicted crossing point is distance Lc, which is shorter than the distance Lb.

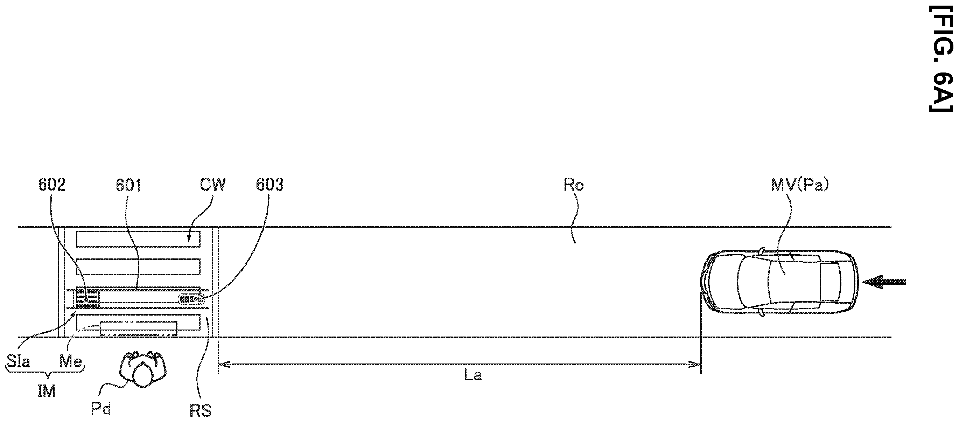

Figure 6A is a plan view illustrating one example of the image IM displayed by means of the driving plan information display process according to a fourth embodiment and a state in which the distance between the vehicle MV (host vehicle) and the crosswalk CW as the predicted crossing point is distance La.

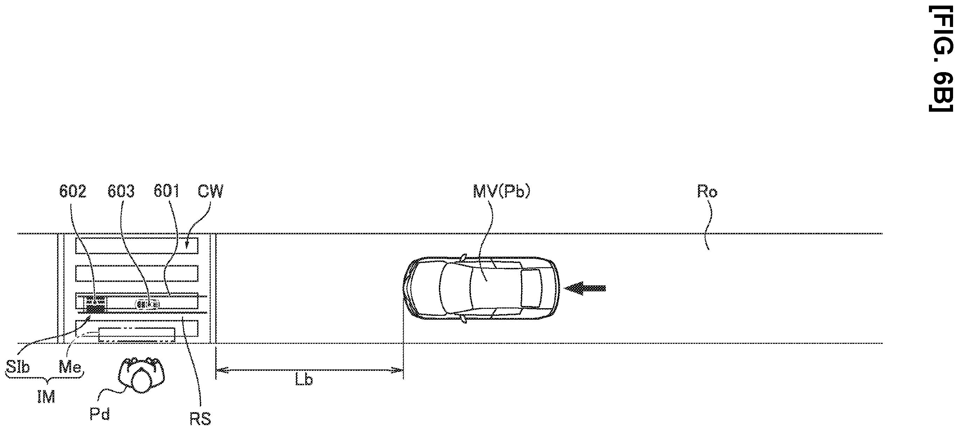

Figure 6B is a plan view illustrating one example of the image IM displayed by means of the driving plan information display process according to the fourth embodiment and a state in which the distance between the vehicle MV (host vehicle) and the crosswalk CW as the predicted crossing point is distance Lb, which is shorter than the distance La.

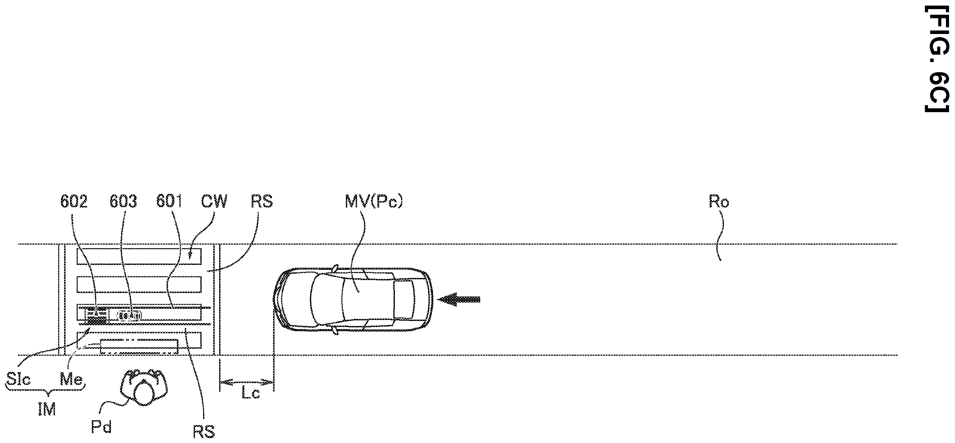

Figure 6C is a plan view illustrating one example of the image IM displayed by means of the driving plan information display process according to the fourth embodiment and a state in which the distance between the vehicle MV (host vehicle) and the crosswalk CW as the predicted crossing point is distance Lc, which is shorter than the distance Lb.

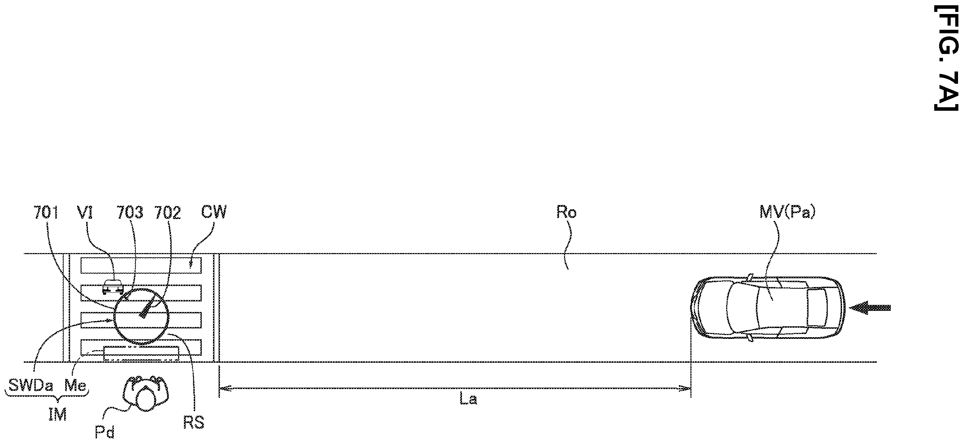

Figure 7A is a plan view illustrating one example of the image IM displayed by means of the driving plan information display process according to a fifth embodiment and a state in which the distance between the vehicle MV (host vehicle) and the crosswalk CW as the predicted crossing point is distance La.

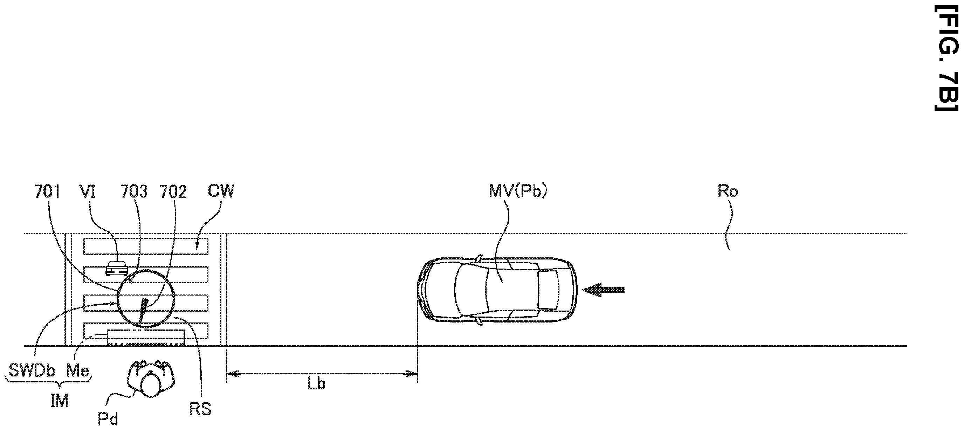

Figure 7B is a plan view illustrating one example of the image IM displayed by means of the driving plan information display process according to the fifth embodiment and a state in which the distance between the vehicle MV (host vehicle) and the crosswalk CW as the predicted crossing point is distance Lb, which is shorter than the distance La.

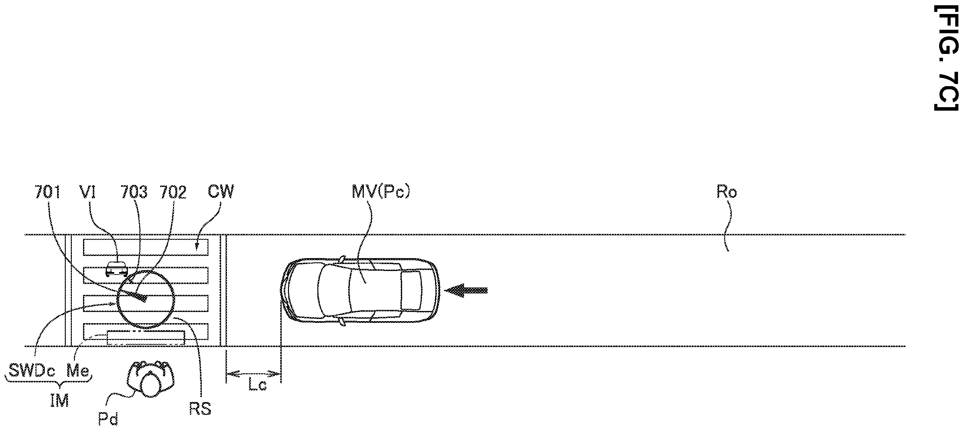

Figure 7C is a plan view illustrating one example of the image IM displayed by means of the driving plan information display process according to the fifth embodiment and a state in which the distance between the vehicle MV (host vehicle) and the crosswalk CW as the predicted crossing point is distance Lc, which is shorter than the distance Lb.

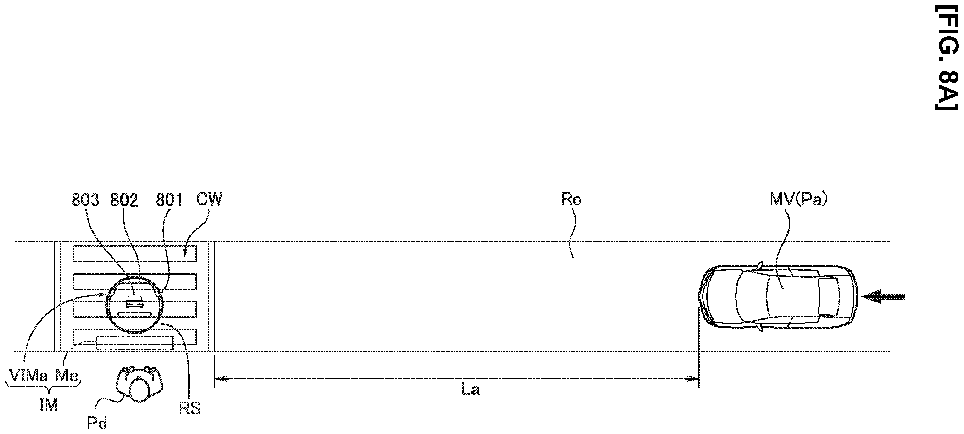

Figure 8A is a plan view illustrating one example of the image IM displayed by means of the driving plan information display process according to a sixth embodiment and a state in which the distance between the vehicle MV (host vehicle) and the crosswalk CW as the predicted crossing point is distance La.

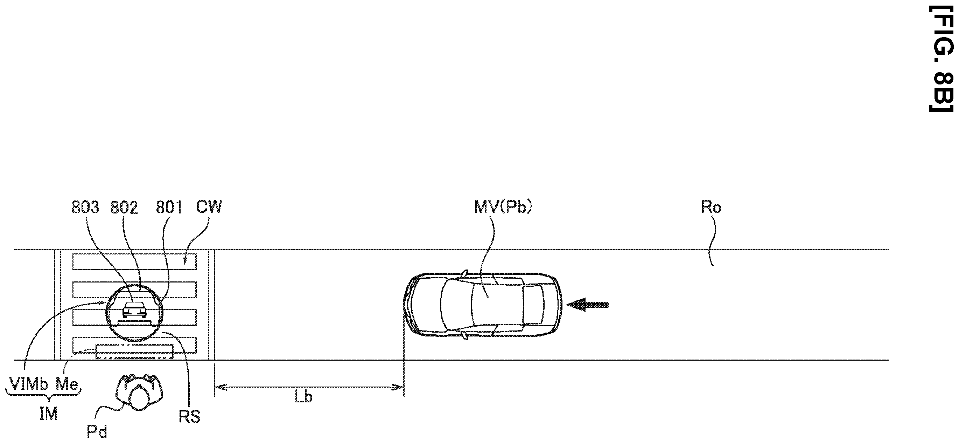

Figure 8B is a plan view illustrating one example of the image IM displayed by means of the driving plan information display process according to the sixth embodiment and a state in which the distance between the vehicle MV (host vehicle) and the crosswalk CW as the predicted crossing point is distance Lb, which is shorter than the distance La.

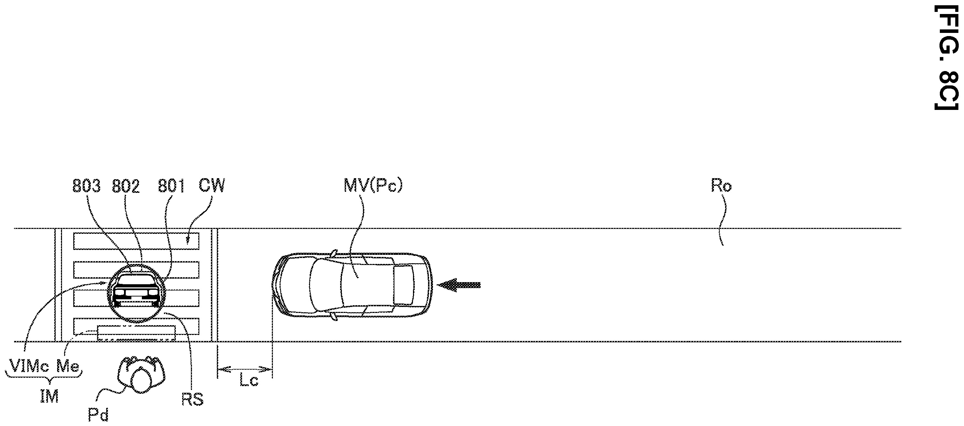

Figure 8C is a plan view illustrating one example of the image IM displayed by means of the driving plan information display process according to the sixth embodiment and a state in which the distance between the vehicle MV (host vehicle) and the crosswalk CW as the predicted crossing point is distance Lc, which is shorter than the distance Lb.

### Embodiments for Implementing The Invention

Embodiments for implementing a driving plan display method and a driving plan display device according to the present disclosure will be described below based on the drawings.

### (First Embodiment)

The driving plan display method and the driving plan display device according to the first embodiment are applied to an autonomous driving vehicle (one example of a driving-assisted vehicle) in which driving, braking, and steering angle are automatically controlled for travel along a generated target travel route when an autonomous driving mode is selected.

Figure 1 illustrates an autonomous driving control system A to which are applied a driving plan display method and a driving plan display device according to a first embodiment. The overall system configuration will be described below based on Figure 1.

The autonomous driving control system A comprises an on-board sensor 1, a map data storage unit 2, an external data communication unit 3, an autonomous driving control unit 4, an actuator 5, a display device 6, and an input device 7.

The on-board sensor 1 includes a camera 11, a radar 12, a GPS 13, and an on-board data communication device 14. In addition, sensor information acquired with the on-board sensor 1 is output to the autonomous driving control unit 4.

The camera 11 is a surroundings recognition sensor that realizes a function to acquire, by means of image data, peripheral information of a vehicle such as lanes, preceding vehicles, pedestrians Pd (refer to Figure 3A), and the like, as a function required for autonomous driving. This camera 11 is configured, for example, by combining a front recognition camera, a rear recognition camera, a right recognition camera, a left recognition camera, and the like of a host vehicle. The host vehicle is a vehicle on which the autonomous driving control system A is mounted and refers to the vehicle MV described in Figure 3A, etc.

It is possible to detect, from camera images, objects and lanes in a host vehicle travel path and objects outside of the host vehicle travel path (road structures, preceding vehicles, trailing vehicles, oncoming vehicles, surrounding vehicles, pedestrians Pd, bicycles, two-wheeled vehicles), the host vehicle travel path (road white lines, road boundaries, stop lines, crosswalks CW, road signs, speed limits, etc.), and the like.

The radar 12 is a ranging sensor that realizes a function to detect the presence of an object, including pedestrians Pd, in the vicinity of the host vehicle and a function to detect the distance to the object in the vicinity of the host vehicle, as functions required for autonomous driving. Here, "radar 12" is a generic term that includes radars using radio waves, lidars using light, and sonars using ultrasonic waves. Examples of the radar 12 that can be used include a laser radar, a millimeter wave radar, an ultrasonic radar, a laser range finder, or the like. This radar 12 is configured, for example, by combining a front radar, a rear radar, a right radar, a left radar, and the like of the host vehicle.

The radar 12 detects the positions of objects on a host vehicle travel path and objects outside of the host vehicle travel path (road structures, preceding vehicles, trailing vehicles, oncoming vehicles, surrounding vehicles, pedestrians Pd, bicycles, two-wheeled vehicles), as well as the distance to each object. If the viewing angle is insufficient, radars may be added as deemed appropriate.

The GPS 13 is a host vehicle position sensor that has a GNSS antenna 13a and that detects the host vehicle position (latitude and longitude) when the vehicle is stopped or in motion by using satellite communication. "GNSS" is an acronym for "Global Navigation Satellite System" and "GPS" is an acronym for "Global Positioning System."

The on-board data communication device 14 is an external data sensor that carries out wireless communication with the external data communication unit 3 via transceiver antennas 3a, 14a to thereby acquire information from the outside that cannot be acquired by the host vehicle.

For example, in the case of a data communication device mounted on another vehicle traveling in the vicinity of the host vehicle, the external data communication unit 3 carries out vehicle-to-vehicle communication between the host vehicle and the other vehicle. With this vehicle-to-vehicle communication, information necessary for the host vehicle can be acquired from among the various pieces of information held by the other vehicle by means of a request from the on-board data communication device 14.

For example, in the case of a data communication device provided in infrastructure equipment, the external data communication unit 3 carries out infrastructure communication between the host vehicle and the infrastructure equipment. By means of this infrastructure communication, information needed by the host vehicle can be acquired from among the various pieces of information held by the infrastructure equipment by means of a request from the on-board data communication device 14. For example, if there is insufficient information in the map data stored in the map data storage unit 2 or information that has been updated from the map data, the insufficient information or updated information can be supplemented. It is also possible to acquire traffic information such as congestion information and travel restriction information for the target travel route on which the host vehicle is scheduled to travel.

The map data storage unit 2 is composed of an on-board memory that stores so-called electronic map data in which latitude/longitude are associated with map information. The map data stored in the map data storage unit 2 are high-precision map data having a level of precision with which it is possible to recognize at least each of the lanes of a road that has a plurality of lanes. By using such high-precision map data, it is possible to generate the target travel route, indicating on which lane from among the plurality of lanes the host vehicle would travel in the autonomous driving. Then, when the host vehicle position detected by the GPS13 is recognized as the host vehicle position information, the high-precision map data around the host vehicle position are set to the autonomous driving control unit 4.

The high-precision map data includes road information associated with each point, and the road information is defined by nodes and links that connect the nodes. The road information includes information for identifying the road from the location and area of the road, a road type for each road, a lane width for each road, and road shape information. For each piece of identification information of each road link, the road information is stored in association with the location of the intersection, directions of approach of the intersection, the type of intersection, and other intersection-related information. For each piece of identification information of each road link, the road information is stored in association with the road type, the lane width, the road shape, whether through traffic is possible, right-of-way, whether passing is possible (whether entering an adjacent lane is possible), the speed limit, signs, and other road-related information.

The autonomous driving control unit 4 has a function to integrate information input from the on-board sensor 1 and the map data storage unit 2 to generate the target travel route, a target vehicle speed profile (including acceleration profile and deceleration profile.), and the like. That is, the target travel route at the lane of travel level from the current position to a destination is generated based on a prescribed route search method, the high-precision map data from the map data storage unit 2, and the like, and the target vehicle speed profile, etc., along the target travel route are generated. In addition, when it is determined that the autonomous driving cannot be maintained as a result of sensing the area around the vehicle by the on-board sensor 1 while the host vehicle is stopped or traveling over the target travel route, the target travel route, the target vehicle speed profile, and the like, are sequentially corrected based on the results of sensing the area around the host vehicle.

When the target travel route is generated, the autonomous driving control unit 4 calculates a drive command value, a braking command value, and a steering angle command value such that the vehicle travels along the target travel route, outputs the calculated command values to each actuator, and causes the host vehicle to travel and stop along the target travel route. Specifically, the calculation result of the drive command value is output to a drive actuator 51, the calculation result of the braking command value is output to a braking actuator 52, and the calculation result of the steering angle command value is output to a steering angle actuator 53.

The actuator 5 is a control actuator that causes the vehicle to travel and stop along the target travel path and includes the drive actuator 51, the braking actuator 52, and the steering angle actuator 53.

The drive actuator 51 receives drive command values input from the autonomous driving control unit 4 and controls the driving force that is output to the drive wheels. Examples of the drive actuator 51 that can be used include an engine in the case of an engine-powered vehicle, an engine and a motor/generator (power running) in the case of a hybrid vehicle, and a motor/generator (power running) in the case of an electric vehicle.

The braking actuator 52 receives braking command values input from the autonomous driving control unit 4 and controls the braking force that is output to drive wheels. Examples of the braking actuator 52 that can be used include a hydraulic booster, an electric booster, a brake fluid pressure actuator, a brake motor actuator, and a motor/generator (regeneration).

The steering angle actuator 53 receives steering angle command values input from the autonomous driving control unit 4 and controls the steering angle of the steerable wheels. Examples of the steering angle actuator 53 that can be used include a steering motor or the like provided in a steering force transmission system of a steering system.

The display device 6 displays on a screen the position of the moving host vehicle on the map to provide the driver and passengers with visual information of the host vehicle's location when the vehicle is stopped or traveling by means of autonomous driving. This display device 6 inputs target travel route information, host vehicle position information, destination information, and the like, generated by the autonomous driving control unit 4, and displays on the display screen a map, roads, the target travel route (travel route of the host vehicle), the host vehicle location, the destination, and the like, in an readily visible manner.

The input device 7 carries out various inputs by means of driver operation, for which purpose a touch panel function of the display device 6 may be used, for example, as well as other dials and switches. Examples of inputs carried out by the driver include input of information relating to the destination and input of settings such as constant speed travel and following travel during autonomous driving, and the like.

In addition, the autonomous driving control unit 4 of the autonomous driving control system A includes a driving plan display controller 40, and executes a driving plan information display control for displaying an image of driving plan-related information, described further below, on a road surface RS (refer to Figure 3A) using a road surface image display device 10.

The road surface image display device 10 is provided at the front or upper portion of the vehicle MV and that irradiates visible light on the road surface RS in front of the host vehicle (for example, several tens to several hundreds of meters ahead) to thereby display an image IM including moving images of letters, diagrams, and the like refer to Figure3A). Examples of the road surface image display device 10 that can be used include devices that irradiate and display laser light, or devices that enlarge and project an image or a video, such as a so-called projector device. In addition, the road surface image display device 10 is disposed at a ground height obtained experimentally in advance, based on the longest distance at which it is desired to display an image by irradiating light on the road surface RS.

Then, information relating to the driving plan to be displayed on the road surface RS in the first embodiment includes required time for arrival Tra, which is the time required for the host vehicle to arrive at the position at which the image IM is to be displayed, and a message indicating whether the host vehicle intends to stop. Here, driving plans are made in advance regarding what type of driving is to be carried out from the current position of the host vehicle (vehicle MV) to the crosswalk CW as the predicted crossing point. Specifically, they are plans such as at what speed or speed change to reach the crosswalk CW, whether to stop, or pass without stopping, at the crosswalk CW, and the like. That is, a vehicle that carries out autonomous driving constantly generates a driving plan relating to vehicle speed, acceleration/deceleration, and steering, such that the vehicle travels along a target travel route generated in advance. For this reason, a driving plan for reaching the crosswalk CW, which is the above-described prescribed point, is also prepared in advance. Thus, it is possible to display information relating to the driving plan. In addition to the required time for arrival Tra described above, information relating to the driving plan that can be displayed includes distance to the crosswalk CW, described further below.

The processing flow of a driving plan display control by the driving plan display controller 40 will be described below with reference to the flowchart of Figure 2.

In Steps S1-S3, route information, vehicle information, and vehicle-surroundings information are input and acquired as information relating to the driving plan and information relating to the crossing prediction. The route information is information relating to the travel route of the host vehicle provided in the autonomous driving control unit 4. In addition to a system request route preset in accordance with driver input in the autonomous driving control unit 4, driver request route corresponding to the driver's steering is also included in this route information. The vehicle information relates to host vehicle travel, such as the steering angle and the vehicle speed of the host vehicle. The vehicle-surroundings information is related to the area around the vehicle obtained from the camera 11, the radar 12, and the like. Specifically, the vehicle-surroundings information includes road information related to the surroundings of the host vehicle, information about objects in the surroundings of the host vehicle and vehicle body information.

In Step S4, to which the process proceeds after each piece of information is input, it is determined whether a pedestrian Pd has been detected in the surroundings of the target travel route (travel route) of the host vehicle. The detection of the pedestrian Pd is carried out based on the vehicle-surroundings information, and the detection is carried out at least beyond the distance at which the image is displayed by the road surface image display device 10 by irradiation of light. If the pedestrian Pd is not detected, the process returns to Step S1, and if the pedestrian Pd is detected, the process proceeds to the subsequent Step S5.

In the subsequent Step S5, it is determined whether the detection point of the pedestrian Pd in the vicinity of the planned travel route of the host vehicle or a point in the vicinity thereof is the terrain where the crossing occurs. Then, if it is terrain in which crossing occurs, the process proceeds to Step S6, and if it is not a terrain in which crossing occurs, the process returns to Step S1.

Here, terrain in which a crossing occurs includes terrain where there is a crosswalk CW (refer to Figure 3A) and terrain where roads intersect. Then, the determination of whether it is terrain in which a crossing occurs is based at least on the host vehicle position information and the map data information, and includes a determination of the presence or absence of the crosswalk CW or an intersection within the range of a prescribed distance ahead in the planned travel route of the host vehicle. In this case, a determination based on the vehicle-surroundings information acquired with the on-board sensor 1, such as the camera 11, may be added.

In addition, within the range of the prescribed distance means within the range of a distance at which the pedestrian Pd (person planning to cross) attempting to cross the crosswalk CW or the intersection can be detected with the on-board sensor 1, and within the range of the distance at which an image can be displayed with the road surface image display device 10, or within the range of a distance slightly exceeding this distance. Specifically, it is within the range of a distance of, or example, several tens of meters to 300 meters from the host vehicle.

In addition, the determination regarding the terrain in which the crossing occurs, or the determination in Step S4 for detecting the pedestrian Pd may include whether the pedestrian Pd is directly facing the crosswalk CW or a road Ro of the planned travel route.

In Step S6, to which the process proceeds when a terrain in which crossing occurs in Step S5 is determined, the required time for arrival Tra, which is the time required for the host vehicle to arrive at the predicted crossing point, which has been determined to be a terrain in which crossing occurs, is calculated, after which the process proceeds to the subsequent Step S7.

In Step S7, the driving plan information display process is executed. In this driving plan information display process, the road surface image display device 10 displays the image IM indicating the information relating to the driving plan on the road surface RS (refer to Figure 3A). In addition, the road surface RS is at an end of the road surface of the crosswalk CW in the street area near the sidewalk in the width direction, and is in the vicinity of the pedestrian's feet when the pedestrian Pd planning to cross is standing in front of the crosswalk CW. In addition, in the first embodiment, the information relating to the driving plan displayed using the image IM includes a message reporting the required time for arrival Tra and the fact that the vehicle will stop or pass at the predicted crossing point.

The image IM to be displayed on the road surface RS will now be described based on Figures 3A to 3C. The image IM displayed by the road surface image display device 10 includes required time for arrival display portions Ta-Tc for displaying the required time for arrival Tra with a number and the unit for second "s," and a message display area Me, which is an area in which an intention to stop, or the like, is displayed using letters, prescribed signs, or the like. Then, the image IM is displayed using a color, such as red or yellow, that can be easily recognized by the pedestrian Pd even if the image overlaps the road surface RS or the white lines of the crosswalk CW.

Figures 3A to 3C show a case in which the predicted crossing point is the crosswalk CW, and each figure shows the difference between the states in which the distance La-Lc between the vehicle MV and the crosswalk CW gradually becomes shorter due to the travel of the vehicle MV, which is the host vehicle.

In this manner, as the distance La-Lc between the position (Pa) to (Pc) of the vehicle MV (host vehicle) and the crosswalk CW (predicted crossing point) becomes shorter, the required time for arrival Tra decreases, so that the number of seconds to be displayed in the required time for arrival display portions Ta-Tc is also changed to smaller values. In this case, for example, the required time for arrival Tra is displayed as a still video in units of a prescribed number of seconds (for example, in units of one second). Here, a still video refers to an image in which the image itself is still, but that appears to be a moving image due to the display changing in increments of the prescribed period of time. That is, although the image of "12s" displayed in the required time for arrival display portion Ta of Figure 3A itself does not move, as shown in Figures 3A to 3C, it appears to be a moving image in which the display changes from "12s" to "1s" in increments of one second.

In addition, the autonomous driving control unit 4 detects the presence or absence of a traffic signal of the crosswalk CW, and if there is no traffic signal, a driving plan to stop before the crosswalk CW is generated as the driving plan. In such a case, the driving plan display controller 40 displays a message in the message display area Me to the effect that the host vehicle will stop by means of a still image or a moving image. That is, the message may be displayed by means of a still image or may be displayed by means of a moving image that repeatedly displays the message moving in the horizontal direction (e.g., from left to right) as seen by the pedestrian Pd, for example.

Moreover, if a traffic light is installed at the crosswalk CW, when the traffic signal with respect to the vehicle MV is a stop signal (red traffic signal), a driving plan to stop before the crosswalk CW is generated as the driving plan in the same manner as described above, and a message that indicates stopping is displayed. On the other hand, when the traffic signal with respect to the vehicle MV is a go signal (green traffic signal), the autonomous driving control unit 4 creates a driving plan to pass through the crosswalk CW. In this case, the driving plan display controller 40 displays a message indicating that that the vehicle will pass through in the message display area Me. Alternatively, in such a case the message display area Me need not be displayed.

Accordingly, the pedestrian Pd who intends to cross can look at the display of the required time for arrival display portions Ta-Tc of the image IM displayed on the road surface RS at the end of the crosswalk CW at his or her feet and visually ascertain the time required for the vehicle MV to reach the crosswalk CW (required time for arrival Tra). Moreover, by looking at the display in the message display area Me, it is possible to know whether or not the vehicle MV intends to stop at the crosswalk CW. In addition, since the image IM is displayed on the road surface RS, the image IM can easily enter the field of view of the pedestrian Pd, even if he or she is looking down at a mobile phone, or the like.

The effects of the driving plan display method and the driving plan display device according to the first embodiment are listed below.
(1) The driving plan display method executed by the autonomous driving control system A of the first embodiment is performed by controlling an in-vehicle road surface image display device 10, which can display an image IM on a road surface RS, with a driving plan display controller 40 to display driving plan-related information of a host vehicle on the road surface RS, comprising steps (S1-S3) for acquiring information relating to the driving plan of the host vehicle and information relating to the prediction of a pedestrian's Pd crossing, steps (S4, S5) for obtaining a predicted crossing point at which the pedestrian's Pd crossing is predicted on a planned travel route of the host vehicle based on the acquired information, and a step (S7) for displaying an image of information relating to the driving plan of the host vehicle, from a current position (Pa, Pb, Pc) of the host vehicle to the crosswalk CW as the predicted crossing point, on the road surface RS of the crosswalk CW as the predicted crossing point with the road surface image display device 10 are provided.
   Thus, it is possible to present to the pedestrian Pd attempting to cross the crosswalk CW driving plan-related information necessary for determining whether or not to cross a road by means of the image IM. Then, the pedestrian Pd can see the image IM displayed on the road surface RS and ascertain the driving plan, such as the required time for arrival Tra of the vehicle MV and whether or not there is an intention to stop, so that making an accurate determination of executing an unimpeded crossing is possible.
   In particular, in the vehicle MV, which travels by means of the autonomous driving control system A, since travel is carried out based on the driving plan that is generated by the autonomous driving control unit 4 in advance, it is possible to present information relating to a highly precise driving plan. Moreover, in the vehicle MV that carries out autonomous driving, there is the possibility that the driver is not facing the travel direction of the vehicle MV; in this case, it becomes difficult for the pedestrian Pd to communicate with the driver with the eyes, i.e., to make so-called eye contact. For this reason, it becomes more effective to display the driving plan by means of the image IM.
(2) The driving plan display method that is executed by the autonomous driving control system A according to first embodiment further comprises a step (S6) for obtaining a required time for arrival, which is the time required for the host vehicle to reach the crosswalk CW as the predicted crossing point from the current position (Pa, Pb, Pc), based on the acquired information, wherein the information relating to the driving plan in the step (7) for displaying an image on the road surface RS includes the required time for arrival Tra. That is, in the image IM, the required time for arrival Tra is displayed using numbers in the required time for arrival display portions Ta-Tc.
   Accordingly, it is possible to present to the pedestrian Pd attempting to cross the crosswalk CW the required time for arrival Tra, which is the time required for the vehicle MV to reach the predicted crossing point (crosswalk CW), necessary for determining whether or not to cross a road. As a result, the pedestrian Pd can more accurately carry out the crossing execution determination.
(3) The driving plan display method that is executed by the autonomous driving control system A according to embodiment is such that, in the step (S7) for displaying an image on the road surface RS, the image is displayed using a moving image showing changes in the driving plan as the host vehicle travels. That is, the time that is displayed in the required time for arrival display portions Ta-Tc is changed in accordance with the required time for arrival Tra, which is the time required to reach the crosswalk CW, changing from moment to moment due to the travel of the vehicle MV.
   Accordingly, it becomes possible to accurately display the driving plan, which changes from moment to moment. As a result, it becomes possible for the pedestrian Pd attempting to cross the crosswalk CW to accurately know the required time for arrival Tra as the driving plan when looking at the image IM. Specifically, if the pedestrian Pd is not looking at the image IM at the time of Figure 3A and the pedestrian Pd looks at the image IM at the time of Figure 3B, it is possible to know the required time for arrival Tra at the time of Figure 3B.
(4) The autonomous driving control system A according to the first embodiment comprises the road surface image display device 10 that is mounted on the host vehicle and that can display the image IM on the road surface RS, the driving plan display controller 40 that controls a display operation of the road surface image display device 10, a portion that executes the process of Steps S1-S3 as an information acquisition unit that acquires information relating to the driving plan of the host vehicle and information relating to prediction of a pedestrian's crossing, and a portion that executes the process of Step S5 as a crossing point prediction unit that obtains a predicted crossing point at which the pedestrian's Pd crossing is predicted on a target travel route (travel route) of the host vehicle. Then, the driving plan display controller 40 controls a display operation of the road surface image display device 10 for displaying an image of driving plan-related information of the host vehicle on the road surface RS of the crosswalk CW as the predicted crossing point, from a current position (Pa-Pc) of the host vehicle to the crosswalk CW as the predicted crossing point.

Therefore, as described in (1) above, it is possible to present to the pedestrian Pd by means of the image IM driving plan-related information, which is information necessary for determining whether or not to cross a road. Then, the pedestrian Pd attempting to cross the crosswalk CW can look at the image IM displayed on the road surface RS and ascertain the driving plan, such as the required time for arrival Tra of the vehicle MV and whether or not there is an intention to stop, so that making an accurate determination of executing a crossing is possible.

### (Other embodiments)

Other embodiments will be described below. The other embodiments illustrate modified examples of the image IM to be displayed with the road surface image display device 10; the basic configurations of the autonomous driving control system A are the same as those of the first embodiment.

Figures 4A to 4C illustrate the image IM to be displayed by means of the driving plan information display process of the second embodiment and changes therein; in the second embodiment, pie chart display portions PCa-PCc are used as the image IM to display the required time for arrival Tra by means of a moving image.

The pie chart display portions PCa-PCc include a circular outer frame portion 401, a required time for arrival display area 402 indicating the required time for arrival Tra, and an elapsed time display area 403 indicating the time that has elapsed since the start of displaying of the image IM. The outer frame portion 401 and the required time for arrival display area 402 are displayed using colors that can be easily recognized on the road surface RS or the white lines of the crosswalk CW, such as red or yellow. The elapsed time display area 403, on the other hand, is made colorless, or displayed in white, gray, or the like, which is difficult to distinguish from the white lines and the road surface RS. The display of the presence or absence of the intention of the vehicle MV (host vehicle) to stop in the message display area Me is carried out in this case as well.

Accordingly, in the image IM, a moving image is shown in which, as the vehicle MV approaches the crosswalk CW and the required time for arrival Tra decreases, the proportion occupied by the required time for arrival display area 402 and the circumferential angle gradually decrease, and the proportion occupied by the elapsed time display area 403 and the circumferential direction gradually increase.

Although the required time for arrival display area 402 displays the required time for arrival Tra, the distance La-Lc between the crosswalk CW (predicted crossing point) and the vehicle MV may be displayed. In this case, the distance La-Lc are obtained instead of the calculation of the required time for arrival Tra in Step S6, to thereby display the distance La-Lc in Step S7.

As described above, even in the second embodiment, the pedestrian Pd can accurately visually ascertain by means of the image IM the presence or absence of an intention to stop as well as the required time for arrival Tra, which is the time required for the vehicle MV to reach the crosswalk CW to be crossed. Thus, even in the second embodiment, it is possible to obtain the effects of (1) to (4) described in the first embodiment.

Figures 5A to 5C illustrate the image IM to be displayed by means of the driving plan information display process of the third embodiment and changes therein; in the third embodiment, bar graph display portions BGa-BGc are used as the image IM to display the required time for arrival Tra by means of a moving image.

These bar graph display portions BGa-BGc include a rectangular outer frame portion 501, a required time for arrival display area 502 indicating the required time for arrival Tra, and an elapsed time display area 503 indicating the time that has elapsed since the start of display of the image IM. The outer frame portion 501 and the required time for arrival display area 502 are displayed using colors that can be easily recognized on the road surface RS or the white lines of the crosswalk CW, such as red or yellow. The elapsed time display area 503, on the other hand, is made colorless, or displayed in white, gray, or the like, that is difficult to distinguish from the white lines and the road surface RS. The display of the presence or absence of the intention of the vehicle MV (host vehicle) to stop in the message display area Me is carried out in this case as well.

Accordingly, in the image IM, a moving image is shown in which, as the vehicle MV approaches the crosswalk CW and the required time for arrival Tra decreases, the proportion occupied by the required time for arrival display area 502 and the length gradually decrease, and the proportion occupied by the elapsed time display area 503 and the length thereof gradually increase.

As described above, even in the third embodiment, the pedestrian Pd can accurately visually ascertain by means of the image IM the presence or absence of an intention to stop as well as the required time for arrival Tra, which is the time required for the vehicle MV to reach the crosswalk CW to be crossed. Thus, even in the third embodiment, it is possible to obtain the effects of (1) to (4) described in the first embodiment.

Figures 6A to 6C illustrate the image IM to be displayed by means of the driving plan information display process of the fourth embodiment and changes therein; in the fourth embodiment, schematic image display portions SIa-SIc are used as the image IM to display information relating to the driving plan using a moving image.

These schematic image display portions SIa-SIc schematically show the relationship between the road Ro, the crosswalk CW, and the vehicle MV (host vehicle). That is, the schematic image display portions SIa-SIc includes a road display portion 601 representing the road Ro, a crosswalk display portion 602 representing the crosswalk CW, and a vehicle display portion 603 representing the vehicle MV. In addition, the road display portion 601, the crosswalk display portion 602, and the vehicle display portion 603 display the actual positional relationships between the road Ro, the crosswalk CW, and the vehicle MV (host vehicle) as a scaled-down image. Each of the display portions 601, 602, 603 are displayed using colors that can be easily recognized on the road surface RS or the white lines of the crosswalk CW, such as red or yellow, and the other portions are made colorless, or displayed in white, gray, or the like, which is difficult to distinguish from the white lines and the road surface RS.

Thus, the interval between the crosswalk display portion 602 and the vehicle display portion 603 may be shown in accordance with the required time for arrival Tra, in the same manner as in the second and third embodiments described above, or may be shown in accordance with the distance La-Lc between the crosswalk CW and the vehicle MV (host vehicle). When shown in accordance with the distance La-Lc in this manner, in Step S6, a process is carried in which the distances La-Lc between the crosswalk CW and the vehicle MV (host vehicle) is obtained, and the interval between the crosswalk display portion 602 and the vehicle display portion 603 is determined based on these distances La-Lc. Alternatively, in the same manner as Step S6 of the first embodiment, the required time for arrival Tra may be obtained, and the interval between the crosswalk display portion 602 and the vehicle display portion 603 may be determined based on this required time for arrival Tra. Additionally, the display of the presence or absence of an intention to stop in the message display area Me is carried out in this fourth embodiment as well.

Accordingly, in the fourth embodiment, the image IM is displayed as a moving image in which the interval between the crosswalk display portion 602 and the vehicle display portion 603 shrinks as the vehicle MV approaches the crosswalk CW.

As a result, the pedestrian Pd can accurately visually ascertain the presence or absence of an intention to stop, the required time for arrival Tra, or the distance La-Lc between the vehicle MV and the crosswalk CW about to be crossed. Thus, even in the fourth embodiment, it is possible to obtain the effects of (1) to (4) described in the first embodiment.

Figures 7A to 7C illustrate the image IM to be displayed by means of the driving plan information display process of the fifth embodiment and changes therein; in the fifth embodiment, stopwatch display portions SWDa-SWDc are used as the image IM to display the required time for arrival Tra by means of a moving image.

These stopwatch display portions SWDa-SWDc include a circular outer peripheral frame 701, a hand portion 702 corresponding to the second hand, a vehicle image portion VI representing the arrival of the vehicle, and a reference portion 703 that protrudes inward from the outer peripheral frame 701.

The outer peripheral frame 701, the hand portion 702, and the reference portion 703, and the vehicle image portion VI are displayed using colors that can be easily recognized on the road surface RS or the white lines of the crosswalk CW, such as red or yellow. The other portions, on the other hand, are made colorless, or displayed in white, gray, or the like, which is difficult to distinguish from the white lines and the road surface RS. Then, the required time for arrival Tra is displayed by means of the clockwise interval between the hand portion 702 and the reference portion 703. The display of the presence or absence of the intention of the vehicle MV (host vehicle) to stop in the message display area Me is carried out in this case as well.

Accordingly, in the fifth embodiment, as shown in Figures 7A-7C, the image IM is displayed as a moving image in which the hand portion 702 gradually approaches the reference portion 703 as the vehicle MV approaches the crosswalk CW.

Thus, the pedestrian Pd can accurately visually ascertain the presence or absence of an intention to stop and the required time for arrival Tra, which is the time required for the vehicle MV to reach the crosswalk CW about to be crossed. Thus, even in the fifth embodiment, it is possible to obtain the effects of (1) to (4) described in the first embodiment.

Figures 8A to 8C illustrate the image IM to be displayed by means of the driving plan information display process of the sixth embodiment and changes therein. This sixth embodiment is an example in which the image IM is displayed as a moving image of the distance La-Lc or the required time for arrival Tra using vehicle image display portions VIMa-VIMc.

The vehicle image display portions VIMa-VIMc include a circular outer peripheral frame 801, a reference vehicle image 802 displayed in contact with the inner periphery of the outer peripheral frame 801, and a vehicle image 803 displayed inside the reference vehicle image 802. Then, the difference in the sizes of the reference vehicle image 802 and the vehicle image 803 represents the required time for arrival Tra, or the distance La-Lc between the crosswalk CW and the approaching vehicle MV.

The vehicle image display portions VIMa-VIMc, the outer peripheral frame 801, the reference vehicle image 802, and the vehicle image 803 are displayed using colors that can be easily recognized on the road surface RS or the white lines of the crosswalk CW, such as red or yellow. The other portions, on the other hand, are made colorless, or displayed in white, gray, or the like, which is difficult to distinguish from the white lines and the road surface RS. The display of the presence or absence of the intention of the vehicle MV (host vehicle) to stop in the message display area Me is carried out in this case as well.

As shown in Figures 8A-8C, in this sixth embodiment, the image IM changes such that the size of the vehicle image 803 gradually approaches the size of the reference vehicle image 802 as the vehicle MV approaches the crosswalk CW from the current position. In addition, the presence or absence of the intention of the vehicle MV to stop is displayed in the message display area Me.

Accordingly, the pedestrian Pd can ascertain the presence or absence of the intention of the vehicle MV to stop at the crosswalk CW, the distance La-Lc to the vehicle MV, or the required time for arrival Tra, which is information necessary to determine whether or not to cross a road at the crosswalk CW. Then, based on the information acquired from the image IM, the pedestrian Pd can accurately determine whether to cross the crosswalk CW. Thus, even in the sixth embodiment, it is possible to obtain the effects of (1) to (4) described in the first embodiment.

The driving plan display method and the driving plan display device according to the present disclosure have been described above based on the embodiments. However, specific configurations are not limited to these embodiments, and various modifications and additions to the design can be made without departing from the scope of the invention according to each claim in the Claims.

For example, in the embodiments, examples were implemented in the autonomous driving control system A, but the invention can be applied to vehicles other than vehicles that carry out autonomous driving. That is, the invention can be applied to a driving assistance device or any other vehicle that can determine the presence or absence of a pedestrian (person planning to cross) as well as to ascertain the travel route of the host vehicle by means of the on-board sensor 1, the map data storage unit 2, and the like.

In addition, in the embodiments a terrain having the crosswalk CW or an intersection was illustrated as the predicted crossing point, but no limitation is imposed thereby. For example, in addition to the crosswalk CW and the intersection a predicted crossing point may be determined when a pedestrian that has a posture that indicates an intention to cross the road Ro is detected.

In addition, in the embodiments, an example was presented in which both the distance La-Lc between the host vehicle and the crosswalk CW (predicted crossing point) or the required time for arrival Tra, and the message indicating the presence or absence of the intention to stop are displayed as driving plan-related information. For example, any one of the required time for arrival Tra, the distance La-Lc, and the presence or absence of the intention to stop may be displayed instead. Additionally, if the message is displayed, a message other than the intention to stop may be displayed as well, in accordance with the situation, such as a message prohibiting crossing.

Furthermore, in the embodiments, an example was presented in which the message display area Me is placed in front of the display of the information relating to the required time for arrival as seen by the pedestrian Pd, but the position is not limited thereto. The display of the information relating to the required time to arrival may be displayed in front, or it may be arranged in parallel to the left and right of the display of the information relating to the required time for arrival.

In addition, in the embodiments, an example was presented in which the target travel route generated by the autonomous driving control unit is used as the travel route, but no limitation is imposed thereby; for example, in a driving assistance device in which a target travel route is not generated, a predicted travel route may be used as the travel route.

## Claims

1. A driving plan display method, in which an in-vehicle road surface image display device that can display an image on a road surface is controlled with a display controller to display driving plan-related information of a host vehicle on the road surface, comprising:
a step for acquiring the driving plan-related information of the host vehicle and information relating to a prediction of a pedestrian's crossing;
a step for obtaining a predicted crossing point at which the pedestrian's crossing is predicted on a travel route of the host vehicle based on the information that was acquired; and
a step for displaying an image of the driving plan-related information of the host vehicle from a current position of the host vehicle to the predicted crossing point on the road surface of the predicted crossing point using the road surface image display device.

2. The driving plan display method according to claim 1, further comprising
a step for obtaining a required time for arrival, which is a time required for the host vehicle to reach the predicted crossing point from the current position based on the information that was acquired, wherein
the driving plan-related information in the step for displaying the image on the road surface includes the required time for arrival.

3. The driving plan display method according to claim 1 or 2, wherein
in the step for displaying the image on the road surface, the image is displayed using a moving image indicating changes in the driving plan as the host vehicle travels.

4. A driving plan display device comprising:
a road surface image display device that is installed in a host vehicle and that can display an image on a road surface,
a display controller that controls a display operation of the road surface image display device,
an information acquisition unit that acquires driving plan-related information of the host vehicle and information relating to prediction of a pedestrian's crossing, and
a crossing point prediction unit that obtains a predicted crossing point at which the pedestrian's crossing is predicted on a travel route of the host vehicle,
wherein
the display controller controls a display operation of the road surface image display device for displaying an image of the driving plan-related information of the host vehicle from a current position of the host vehicle to the predicted crossing point on the road surface of the predicted crossing point.
